## Europäisches Patentamt

## European Patent Office

## Office européen des brevets

(19)

(11) Veröffentlichungsnummer: **0 308 453 B1**

(12) # EUROPÄISCHE PATENTSCHRIFT

(45) Veröffentlichungstag der Patentschrift :
12.06.91 Patentblatt 91/24

(51) Int. Cl.⁵ : **G01L 5/10**

(21) Anmeldenummer : 88902831.2

(22) Anmeldetag : 16.03.88

(86) Internationale Anmeldenummer :
PCT/EP88/00207

(87) Internationale Veröffentlichungsnummer :
WO 88/07183 22.09.88 Gazette 88/21

(54) ZUGKRAFT-MESSWERTGEBER ZUR ERMITTLUNG DER ZUGKRÄFTE BEIM VERLEGEN VON KABELN.

(30) Priorität : 18.03.87 DE 3708749

(43) Veröffentlichungstag der Anmeldung :
29.03.89 Patentblatt 89/13

(45) Bekanntmachung des Hinweises auf die
Patenterteilung :
12.06.91 Patentblatt 91/24

(84) Benannte Vertragsstaaten :
AT BE CH DE FR GB IT LI LU NL SE

(56) Entgegenhaltungen :
DE-A- 2 900 770
Patent Abstracts of Japan, volume 6, No. 52
(E-100) (930) 7 April 1982 & JP-A-56165425

(73) Patentinhaber : Peter Lancier
Maschinenbau-Hafenhütte GmbH & Co. KG
Petersheide 37
W-4400 Münster-Wolbeck (DE)

(72) Erfinder : VEMMER, Helmut
Ohligser Strasse 1
W-5600 Wuppertal (DE)

(74) Vertreter : Hoffmeister, Helmut, Dr. Dipl.-Phys.
Patentanwalt Goldstrasse 36
W-4400 Münster (DE)

## Beschreibung

Die Erfindung betrifft einen Zugkraft-Meßwertgeber, der in Zugverbindung mit einem Kabel zur Ermittlung der Zugkräfte beim Verlegen des Kabels dient, wobei der Meßwertgeber wenigstens folgende Teile umfaßt :

– einen Kraftmeßfühler, z.B. Dehnungsmeßstreifen,

– einen dem Kraftmeßfühler nachgeschalteten Vorverstärker,

– einen Spannungs-Frequenz-Wandler, der das Signal des Kraftmeßfühlers wandelt,

– einen Übertragungskreis, der das gewandelte Signal des Kraftmeßfühlers auskoppelt und an eine Ablesestation überträgt, und

– einen Akkumulator zur Stromversorgung vorgenannter Elemente.

Es sind Zugkraft-Meßwertgeber bekannt (geliefert von FERTEX, Frankreich), die zwischen dem Kabel-Zugseil und dem eigentlichen Kabel eingesetzt werden, so daß jeweils festgestellt werden kann, welche Zugkräfte am Kabel auftreten. Der Zugkraft-Meßwertgeber wandelt die gemessenen Zugkräfte in ein frequenzmoduliertes Signal. Das Signal wird über das aus Metall bestehende Zugseil selbst übertragen. Im Bereich der Zugwinde befindet sich ein Empfänger, der mit einem elektronischen Schaltkreis ausgerüstet ist, der die Meßwerte zur Anzeige bringt, registriert und überwacht. Entsprechend den gemessenen Werten können darüber hinaus auch weitere Aktionen gesteuert werden, beispielsweise kann die Winde gestoppt oder beschleunigt werden.

Der bekannte Zugkraft-Meßwertgeber besitzt ein Gehäuse, in dem sich neben den elektronischen Teilen auch ein Akkumulator befindet. Hierbei handelt es sich im allgemeinen um einen aufladbaren Nickel-Cadmium-Akkumulator. Der Energieinhalt dieses Akkumulators ist begrenzt ; dementsprechend ist auch die Betriebsdauer des Meßwertgebers entsprechend dem Stromverbrauch terminiert.

Bei dem üblichen Ablauf der Anwendung eines Zugkraft-Meßwertgebers der vorgenannten Art werden mit der entsprechenden Kabelwinde Längen zwischen 500 und 2000 m Kabel eingezogen, wobei die Tendenz dahin geht, noch längere Kabellängen einzuziehen. Das Einziehen, das unter Berücksichtigung vieler Vorsichtsmaßnahmen zu geschehen hat, dauert üblicherweise bei derartigen Längen mehrere Stunden. Dabei geschieht es relativ häufig, daß das Kabel bereits nach einer Teilstrecke durch unvorhergesehene Hindernisse, z.B. Verwerfungen des Leerrohres, nicht mehr weitergezogen werden kann, da die maximale Zugkraft überschritten wird. In einem solchen Fall muß der Einziehvorgang abgebrochen werden. Es ist erforderlich, den Kabelkanal oder das Einziehrohr im Bereich des Kabelanfanges aufzugraben. Hierdurch vergeht weitere Zeit, in der der akkumulatorgetriebene Meßwertgeber Energie verbraucht. In solchen Fällen ist daher die Ladeenergie nicht mehr ausreichend, den Meßwertgeber zu speisen. Es wird erforderlich, den Meßwertgeber auszutauschen. Dieser Austausch führt zu einer weiteren Verzögerung allein aufgrund der notwendigen Aufgrab- und Austauscharbeiten. Hinzu kommt aber noch, daß die Eichung des Meßwertgebers, die vor Beginn der Einzieharbeiten durchgeführt wurde, nicht mehr aktuell ist, wenn der aufzuladende Meßwertgeber gegen einen aufgeladenen, zweiten Meßwertgeber ausgetauscht wird.

Es stellt sich demnach die Aufgabe, einen Zugkraft-Meßwertgeber der eingangs genannten Art anzugeben, bei dem der Stromverbrauch reduziert ist, so daß bei gleichen, hochwertigen Akkumulatoren eine längere Betriebsdauer gegeben ist, die dazu ausreicht, ein übliches Einzieh- und Meßprogramm, daß sich über einen ganzen Tag erstrecken kann, ohne Auswechseln des Meßwertgebers durchzuführen.

Diese Aufgabe wird gelöst, indem der Stromverbrauch in den Zeiten, in denen keine Meßwertaufnahmen durchgeführt werden, reduziert wird. Dies geschieht dadurch, daß der Meßwertgeber zusätzlich einen zeitgesteuerten Schalter aufweist, der die Stromversorgung wenigstens eines stromverbrauchenden Elementes nach einer festgelegten Zeitspanne $t_1$ einer Zugkraftkonstanz unterbricht und erst bei Auftreten einer Zugkraftänderung am Meßwertgeber wieder einschaltet. Bei Auftreten einer Zugkraftänderung während der Zeitspanne der konstanten Zugkraft wird die Zeitspanne bis zur Stromversorgungsunterbrechung selbstverständlich um einen festgelegten Betrag verlängert und während der Verlängerung die Stromversorgung nicht unterbrochen.

Der Meßwertgeber ist demnach so konzipiert, daß nach Aufladen des Akkumulators und Herausnehmen des Meßwertgebers aus dem Ladegerät die stromverbrauchenden Elektronikgruppen, insbesondere die Endstufe und der Spannungs-Frequenz-Wandler, zunächst eingeschaltet sind, jedoch sich bei längerem Warte- und Rüstzeiten, die z.B. 10 min überschreiten, sich selbst ausschaltet. Vorzugsweise sind von der Abschaltung der Kraftmeßfühler und der diesem nachgeschaltete Vorverstärker sowie die Steuerkreise ausgenommen. Diese werden in einer stromsparenden "Schlafschaltung" mit minimalem Energieverbrauch betrieben. In diesem Zustand kann der Meßwertgeber ohne nennenswerten Stromverbrauch zwischen Fernmeldekabel und Stahlzugseil montiert werden. Die Zugkraftänderung ist demnach als ein bestimmtes Signal vom Vorverstärker definiert, das über einen nachgeschalteten Differenzierer geschickt wird, den nur Signaländerungen

$$\frac{du}{dt} \neq 0$$

wirken lassen und der dann, wenn dessen Ausgangssignal die Schwellenspannung eines Comparators übersteigt, dem zeitgesteuerten Schalter ein Reset-Signal aufgibt, wobei in diesem Falle von der Abschaltung der Kraftmeßfühler und der diesem nachgeschaltete Vorverstärker, Differenzierer, Comparator und der zeitgesteuerte Schalter ausgenommen sind.

Das elektrische Einschalten und Aktivieren des Meßwertgebers erfolgt erst durch kurzes Anziehen des Stahlseils mit der Kabelziehwinde, so daß kurzzeitig eine kleine Kraft auf den Meßwertgeber ausgeübt wird. Ist dieser beispielsweise auf eine Zugkraft von 10 kN ausgelegt, so wird eine Kraftänderung zwischen 10 bis 100 N bestimmt.

Die Zugkraftänderung kann durch mechanische Zugkraftschalter erfaßt werden. Vorzugsweise wird jedoch bei einem Meßwertgeber mit eingeschaltetem Kraftmeßfühler und Vorverstärker die Kraftänderung von diesen Elementen erfaßt. Über einen Steuerimpuls wird dann ein Zähler auf RESET gesetzt, so daß er erneut mit dem Zählen beginnt.

Durch den Zähler wird jeweils eine bestimmte, festgelegte Zeitspanne $t_1$ gezählt. Diese Zeitspanne sollte nach den Erfahrungen des Anmelders etwa bei 10 Minuten liegen. Es sind aber auch kürzere oder längere Zeitspannen denkbar, so daß angenommen werden kann, daß die festgelegte Zeitspanne $t_1$ im vorgenannten Sinne etwa zwischen 2 und 20 Minuten liegen kann. Das heißt, daß dann, wenn den Zeitgesteuerten Schalter während dieser Zeit kein Impuls erreicht, der eine Zugkraftänderung signalisiert, dieser Schalter vorzugsweise die Stromversorgung des Spannungs-Frequenz-Wandlers und des Endverstärkers ausschaltet. Das Einschalten des Systems erfolgt immer dann, wenn eine Zugkraftänderung eintritt, unabhängig von der tatsächlich angelegten Kraft. Es werden dann der Spannungs-Frequenz-Wandler und der nachgeschaltete Verstärker eingeschaltet.

Der Meßwertgeber sendet jetzt bereits mit einer von der eingestellten Grundfrequenz abweichenden Frequenz. Nach dem Einschalten zu Beginn der Arbeiten kann demnach der Einziehvorgang zügig fortgesetzt werden. Verstreicht allerdings die eingestellte Zeitspanne, so schaltet der Meßwertgeber automatisch wieder ab.

Wird der Einziehvorgang innerhalb der eingestellten Zeit $t_1$, d.h. beispielsweise innerhalb der eingestellten 10 Minuten, begonnen, so erhält der Impulszähler des zeitgesteuerten Schalters einen über einen Schaltimpuls auslösbaren RESET-Zustand, der eine neue Regelzählung von n Impulsen einleitet. Nur dann, wenn ohne Durchlauf des RESET-Zustandes der Impulszähler jeweils n Impulse durchzählen kann, wird dieser auch einen Abschaltimpuls auslösen. Der RESET-Zustand wird vorzugsweise über einen Vorverstärker geschaltet, der sich an den Ausgang des Kraftmeßfühlers anschließt. Infolge der natürlichen Lastschwankungen werden hierdurch ständig neue Steuerimpulse erzeugt. Wird, wie bei dem eingangs genannten Beispiel, der Einziehvorgang unterbrochen, wobei sich der Meßwertgeber an einer aufzugrabenden Stelle befindet, so schaltet sich dieser nach der festgelegten Zeitspanne von z.B. 10 Minuten automatisch ab, unabhängig davon, ob die Zugkraft auf Null zurückgegangen ist, und geht in eine stromsparende "Schlafschaltung" über. Werden die Einzieharbeiten fortgesetzt, so genügt das kurze Anrucken des Seiles, um den Meßwertgeber erneut zu aktivieren. Durch die vorstehend beschriebene Anordnung wird gewährleistet, daß dieser nur während seiner aktiv messenden Zeit eingeschaltet ist. Diese Zeit ist aber im allgemeinen so kurz bemessen, daß mit einem einzigen Zugkraft-Meßwertgeber über einen ganzen Tag gearbeitet werden kann, ohne daß vollständige Entladungen des Akkumulators auftreten.

Weiterhin ist vorteilhaft, den vorstehend beschriebenen Zugkraft-Meßwertgeber so auszustatten, daß Bedienungsfehler möglichst vermieden werden. Hierzu gehört, daß beim Anlegen einer Aufladespannung für den Akkumulator der dem Spannungs-Frequenz-Wandler üblicherweise nachgeschaltete Leistungsverstärker nicht im Kurzschlußbetrieb mit dem Ladegerät galvanisch verbunden ist. Dementsprechend wird vorgeschlagen, eine zusätzliche Abschaltung vorzusehen, die auch vor Ablauf der eingestellten Zeitspanne ("10 Minuten-Frist") eine Abschaltung bewirken kann, wenn der Meßwertgeber zur Wiederaufladung des eingebauten Akkumulators an ein Ladegerät geschaltet wird. Die dabei auftretende Schaltspannung schaltet bei belegen einer Aufladespannung an die Pole des Akkumulators den Leistungsverstärker und den Spannungs-Frequenz-Wandler ebenfalls ab.

Bei Anliegen der Akkumulator-Ladespannung, d.h. einer Schaltspannung, wird demnach ebenfalls ein RESET-Signal des Zähler-Bausteins für die Dauer der Anlegung bewirkt. Nach Abschaltung der Akkumulator-Ladespannung wird der Zählerbaustein den Steuerschalter automatisch wieder einschalten, wobei die elektrische Aktivierung durch Abschaltung der Ladespannung unabhängig von der bereits beschriebenen mechanischen Aktivierung bei mechanischer Kraftänderung erfolgt.

Demnach erspart die automatische elektrische Einschaltung des Zugkraft-Meßwertgebers nach der Akkumulatorladung bei der Nullpunkt-Kalibrierung des Meßempfängers ein mechanisches Einschalten durch Kraftänderung.

Darüber hinaus können weitere zeit- oder spannungsgesteuerte Abschaltungen gemäß den Unteransprüchen 9 und 10 vorgenommen werden.

Weiterhin ist vorteilhaft, den Zugkraft-Meßwertgeber in zwei Teile aufzuteilen. Es werden hierzu zwei sogenannte Meßbirnen vorgesehen, die als zylindrische Körper gestaltet sind. Diese sind über ein Stahlseil miteinander verbunden. Diese Aufteilung ermöglicht es, daß der Meßwertgeber sehr viel flexibler gestaltet werden kann als in Fällen, in denen alle Teile des Meßwertgebers in einem einzigen Gehäuse untergebracht sind. Dabei wird vorzugsweise die eine Meßbirne den Akkumulator tragen, während die andere, unmittelbar am Kabel angebrachte Meßbirne die Teile des elektronischen Meßkreises, insbesondere den Kraftmeßfühler enthält. Diese beiden Meßbirnen sind durch eine elektrische Doppelleitung untereinander verbunden.

Eine dritte Verbindungsleitung zwischen den beiden Seilbirnen kann durch das Stahlseil selbst gebildet werden, wobei dieses auf Elektronik-Massepotential liegt, so daß das Stahlseil selbst sowie das Seilbirnengehäuse der Meßelektronik als elektrischer Schutzschirm wirken.

Dazu wird das Verbindungsstahlseil vorteilhafterweise in die Akkumulator-Seilbirne isoliert eingebracht, so daß die Akkumulator-Seilbirne gegenüber der Meßwertgeber-Seilbirne ein anderes Potential aufweisen kann.

Schließlich ist diese Anordnung auch deshalb vorteilhaft, weil die beiden Gehäuse der Seilbirnen die Pole darstellen, über die die Meßwechselspannung abgegeben wird und gleichzeitig diese Pole auch zur Wiederaufladung des Akkumulators dienen.

Ein Ausführungsbeispiel des Meßwertgebers ist in der Zeichnung dargestellt. Die Figuren der Zeichnung zeigen im einzelnen :

Figur 1 in schematischer Darstellung die elektrischen Teile eines Meßwertgebers gemäß Erfindung,

Figur 2 den Meßwertgeber in einer zweigeteilten Form.

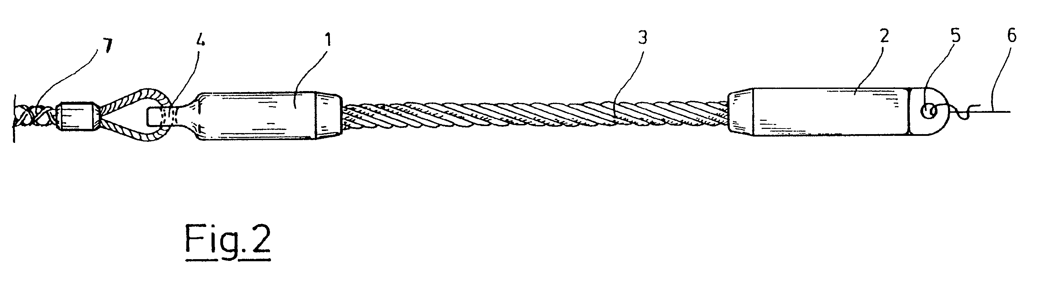

Wie bekannt, wird die kraftschlüssige Verbindung des Zugseiles mit dem einzuziehenden Kabel durch einen als Kabelzugkopf gestalteten Zugkraft-Meßwertgeber (Figur 2) hergestellt. Davon abweichend können jedoch auch derartige Zugköpfe über ein einziges Gehäuse verfügen, wie dies beispielsweise aus dem eingangs genannten Stand der Technik bekannt ist. Die nachstehend beschriebene Ausführungsform soll daher nicht einschränkend in Bezug auf den Schutzumfang der Erfindung verstanden werden.

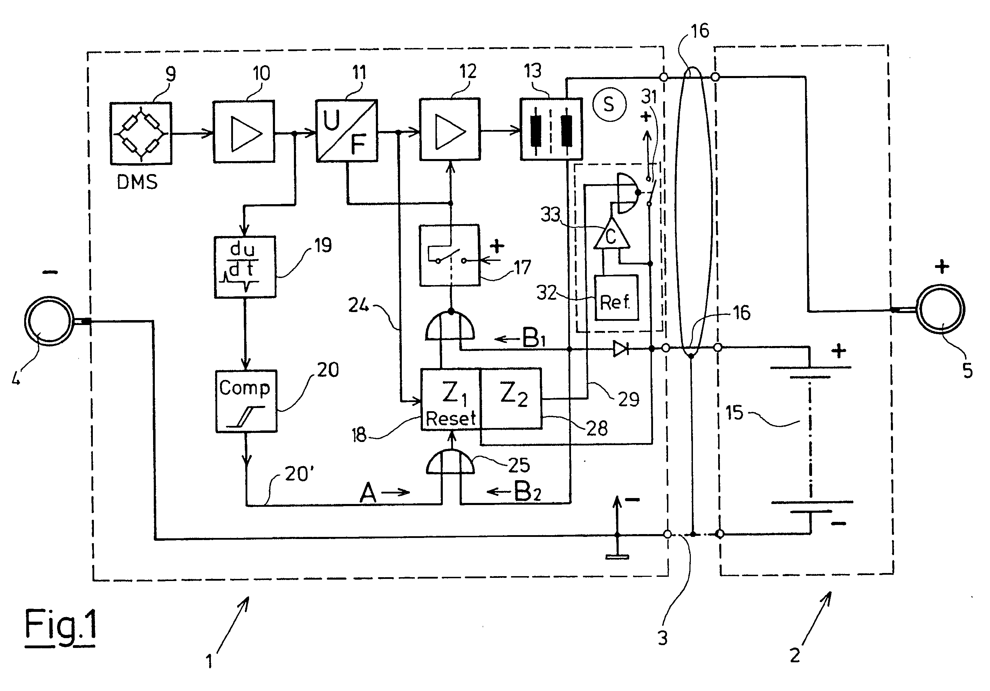

Figur 1 und Figur 2 stellen einen Zugkraft-Meßwertgeber dar, der aus zwei sogenannten Birnen 1, 2 und einem diese verbindenden Stahlseil 3 besteht. An ihren Enden tragen die Birnen 1, 2 Zugösen 4, 5. Die Teile 1 bis 5 sind schematisch auch in der Figur 1 dargestellt. An die Zugöse 5 schließt sich ein Zugseil 6 und an die Zugöse 4 ein sogenannter Ziehstrumpf 7 an, der das Kopfende eines Kabels (nicht dargestellt) umfaßt und damit eine mechanische Verbindung zu diesem herstellt. Die Meßbirne 1 ist mit einem Akkumulator 15 in der Meßbirne 2 elektrisch verbunden über zwei isolierte Innenleiter 16 im Stahlseil 3 (vgl. Figur 1).

Es sei an dieser Stelle angemerkt, daß der Zugkraft-Meßwertgeber ohne wesentliche Modifikationen auch zum Einziehen von Seilen, Schläuchen und ähnlichen Gebilden verwendet werden kann, so daß der Begriff "Kabel" des Anspruches sich auch auf derartige Teile erstreckt.

Die auf das Kabel ausgeübte Zugkraft entspricht der Zugkraft, die zwischen den beiden Zugösen 4 und 5 herrscht. Diese wird, wie an sich bekannt, von einem Kraftmeßfühler, hier Dehnungsmeßstreifen 9 abgefühlt und als elektrisches Spannungssignal einem nachgeschalteten Vorverstärker 10 übertragen. Die Dehnungsmeßstreifen sind beispielsweise in Form einer Brückenschaltung angeordnet. Eine Zugkraftänderung dieser Dehnungsmeßstreifen 9 bewirkt eine Spannungsänderung am Brückenausgang. Die Höhe der am Brückenausgang anstehenden Spannung ist ein Maß für die Größe der im Kabel herrschenden Zugkraft.

Nach der Verstärkung dieses Signales im Vorverstärker 10 wird es einem Spannungs-Frequenz-Wandler 11 zugeleitet. Das frequenzmodulierte Ausgangssignal wird einem Übertragungskreis zugeführt, der im vorliegenden Fall einen Endverstärker 12 und einen Übertrager 13 umfaßt. Der Übertrager 13 dient zur Potentialtrennung sowie zur Anpassung und Steuerung des Endverstärkers 12.

Am Ausgang des Übertragungskreises steht demnach ein Signal S zur Verfügung, das in an sich bekannter Weise übertragen und weiterverarbeitet werden kann.

Die vorgenannten Teile sind sämtlich in der Birne 1 untergebracht.

In der Birne 2 befindet sich der Akkumulator 15, der über das entsprechend geführte und elektrisch eingerichtete Stahlseil 3 mit zwei isolierten Innenleitern 16 die elektrischen Teile mit einer Speisespannung und einem Speisestrom versorgt. Die Zuleitungen zu den einzelnen elektronischen Teilen sind nicht im einzelnen dargestellt. Nur dort, wo es erfindungswesentlich ist, sind Leitungen ausgeführt.

Die Speisespannung, die zum Betrieb des Spannungs-Frequenz-Wandlers 11 dient, wird über einen elektronisch zu betätigenden Schalter 17 zugeführt. Der Schalter 17 wird über einen Zählerbaustein 18 ($Z_1$) gesteuert und betätigt, der jeweils nach Durchlaufen einer RESET-Stellung bei 0 mit der Zählung beginnt und bis zu einer Zahl n zählt. Sobald diese Zahl erreicht ist, ist eine bestimmte einstellbare Zeitspanne $t_1$, z.B. 10 Minuten, vergangen. Wird der Zählerstand n erreicht, so schaltet der Zählerbaustein 18 den Schalter 17, der damit die Stromzufuhr zum Spannungs-Frequenz-Wandler unterbricht und diesen damit abschaltet.

Am Ausgang des Spannungs-Frequenz-Wandlers 11 kann eine Signalspannung mit einer variablen Frequenz abgenommen werden. Die Variabilität der Frequenz ist jedoch um die Normalfrequenz herum sowenig abweichend, daß diese Frequenz wiederum als Taktfrequenz für den Zählerbaustein 18 verwendet werden kann, dem sie über eine Leitung 24 zugeführt wird. Durch diese Maßnahme erübrigt sich ein besonderer Taktgenerator. Ein solcher Taktgenerator kann aber gegebenenfalls eingebaut sein.

Dem Zählerbaustein 18 vorgeschaltet ist ein Differenzierverstärker 19, der an den Ausgang des Vorverstärkers 10 gelegt ist. Bei Spannungsschwankungen am Ausgang des Vorverstärkers 10 wird der Differenzierverstärker 19 über einen Comparator 20 Impulse (Signal A) an den Zählerbaustein 18 geben und diesen damit jeweils auf RESET setzen und zu einer neuen Zählung veranlassen. Solange der Zählbaustein 18 zählt, ist der Schalter 17 eingeschaltet und der Stromkreis zum Spannungs-Frequenz-Wandler 11 und zum Endverstärker 12 über eine Leitung nicht unterbrochen. Das bedeutet auf der anderen Seite, daß dann, wenn Zugkraftkonstanz besteht oder bestimmte minimale Kraftänderungen am Dehnungsmeßstreifen 9 nicht überschritten werden, auch keine Spannungsänderungen auftreten, so daß über die Leitung 20 keine Steuerimpulse an den Zählerbaustein 18 gelangen. Dieser kann daher ungestört bis zur Zahl n durchzählen und damit den Schalter 17 betätigen. Damit wird das gesamte elektronische System der Birne 1, bis auf den Dehnungsmeßstreifen 9, den Vorverstärker 10, den Differenzierverstärker, Comparator 20 und den zeitgesteuerten Schalter 17, 18 abgeschaltet, so daß nur noch der äußerst geringe Ruhestrom durch die Teile 9, 10, 17, 18, 19 und 20 fließt und verbraucht wird. Die übrigen Teile verbrauchen praktisch keinen Strom mehr und schonen damit den Akkumulator 15.

Nach Arbeitsende oder aber auch dann, wenn zwischenzeitlich der Zugkraft-Meßwertgeber zugänglich ist und eine Arbeitspause eintritt, kann der Meßwertgeber an eine Aufladestation (nicht dargestellt) angeschlossen werden. Hierzu genügt es, wenn eine entsprechende Aufladespannung an die beiden Zugösen 4 (Minus-Pol beim Laden) und 5 (Plus-Pol beim Laden) angeschlossen wird. Um zu verhindern, daß der Endverstärker und Übertrager 12, 13 in diesem Falle gegen die Ladespannung arbeitet, ist eine weitere Steuerspannung $B_1$ vorgesehen, die ebenfalls den Schalter 17 steuert und damit den Stromkreis ausschaltet, wenn auf den Meßwertgeber von außen her eine Ladespannung wirkt.

Das Steuersignal $B_2$ wirkt bei angelegter Akkumulator-Ladespannung über ein ODER-Gatter 25 auf den Zählerbaustein 18 und setzt diesen auf RESET, so daß nach Abschaltung der Ladespannung der Zugkraft-Meßwertgeber automatisch für n Zählimpulse (z.B. 10 Minuten) eingeschaltet ist. Diese elektrische Einschaltung des Zugkraft-Meßwertgebers erspart bei der Nullpunktskalibrierung des Meßempfängers ein mechanisches Einschalten durch Zugkraftänderung.

Vorteilhaft ist es, wenn neben der Abschaltung nach einer Zeitspanne $t_1$ noch weitere Abschaltmöglichkeiten vorgesehen werden. Wenn der Zugkraft-Meßwertgeber beispielsweise auf Lager liegt, ist gewünscht, eine Abschaltung nach einer Zeitspanne $t_2 \gg t_1$ vorzunehmen, beispielsweise nach 24 Stunden. Der Zugkraft-Meßwertgeber kann dann wieder aktiviert werden, indem er in ein Ladegerät gelegt wird, so daß die Spannung $B_1$ auftritt.

Um diese letztgenannte Schaltmöglichkeit vorzusehen, ist ein weiterer Zähler $Z_2$, Bezugszahl 28, vorgesehen. Dieser ist üblicherweise ein weiterer, mit höherer Binärstufe zählender Ausgang des vorhandenen Zählers, d.h. beide Zähler $Z_1$ und $Z_2$ werden durch denselben Taktgenerator bedient, greifen aber verschiedene Binärstufen an ihren Ausgängen ab. Die Zeitspanne $t_2$, bei der zweite Zähler $Z_2$ jeweils ein Schaltsignal abgibt, liegt bei 24 Stunden.

Das Schaltsignal gelangt über die Leitung 29 an das ODER-Gatter 30 mit Schalter 31, so daß die Stromversorgung immer dann unterbrochen wird, wenn die Zeit $t_2$ von 24 Stunden überschritten wird. Eine weitere Unterbrechungsmöglichkeit aller stromverbrauchenden Elemente ist dadurch gegeben, daß ein Comparator 33 das vom Akkumulator kommende Spannungssignal $B_1$ mit einer Referenzspannung 32 vergleicht und bei Vorliegen einer Unterspannung den spannungsgesteuerten Schalter 31 schaltet, so daß ebenfalls die Stromzufuhr unterbrochen wird.

Wird der Zugkraft-Meßwertgeber in ein Ladegerät eingelegt, so wird über die Ladespannung $B_2$ ein Reset-Signal an die Zähler $Z_1$ und $Z_2$ gegeben, so daß diese wieder zu zählen beginnen. Darüber hinaus ist erforderlich, daß das Spannungssignal $B_1$ über den Referenz-Spannungswert ansteigt, wenn der Schalter 31 die Spannungsversorgung wieder einschalten soll. Geschieht dieß, so ist das Gerät wieder arbeitsbereit, wie eingangs beschrieben worden ist.

Die Meßbirnen 1, 2 mit den Zugösen können gleichzeitig zum Aufladen des Akkumulators benutzt werden. Wie aus den Figuren erkennbar, sind die elektronischen Teile in der Birne 1 und der Akkumulator in der Birne 2 untergebracht. Durch diese mechanische Trennung und Verbindung durch ein Stahlseil 3 ist der Meßwertgeber sehr flexibel und an die verschiedensten Bedingungen (z.B. enge Rohrradien) anzupassen.

Als dritte Verbindungsleitung zwischen den beiden Birnen 1 und 2 kann demnach das Stahlseil 3 selbst dienen. Dieses liegt auf Elektronik-Massepotential, so daß das Stahlseil 3 sowie das Gehäuse der Seilbirne 1 als elektrischer Schutzschirm wirken. Das Stahlseil 3 ist mit der Akkumulator-Seilbirne 2 isoliert verbunden, so daß diese gegenüber der Meßwertgeber-Seilbirne 1 ein anderes Potential aufweisen kann.

Es sei angemerkt, daß mit Hilfe weiterer manuell oder elektronisch zu betätigender Schaltelemente weitere sicherheitsbedingte Schaltvorgänge ausgelöst werden können.

## Ansprüche

1. Zugkraft-Meßwertgeber, der in Zugverbindung mit einem Kabel zur Ermittlung der Zugkräfte beim Verlegen des Kabels dient, wobei der Meßwertgeber wenigstens folgende Teile umfaßt :
– einen Kraftmeßfühler, z.B. Dehnungsmeßstreifen,
– einen dem Kraftmeßfühler nachgeschalteten Vorverstärker,
– einen Spannungs-Frequenz-Wandler, der das Signal des Kraftmeßfühlers wandelt,
– einen Übertragungskreis, der das gewandelte Signal des Kraftmeßfühlers auskoppelt und an eine Ablesestation überträgt, und
– einen Akkumulator zur Stromversorgung vorgenannter Elemente, dadurch gekennzeichnet, daß der Meßwertgeber zusätzlich einen zeitgesteuerten Schalter (17, 18) aufweist, der die Stromversorgung wenigstens eines stromverbrauchenden Elementes nach einer festgelegten Zeitspanne $t_1$ einer Zugkraftkonstanz unterbricht und erst bei Auftreten einer Zugkraftänderung wieder einschaltet.

2. Zugkraft-Meßwertgeber nach Anspruch 1, dadurch gekennzeichnet, daß die Zugkraftänderung als ein bestimmtes Signal vom Vorverstärker (10) definiert ist, das über einen nachgeschalteten Differenzierverstärker (19) geschickt wird, den nur Signaländerungen

$$\frac{du}{dt} \neq 0$$

wirken lassen und der dann, wenn dessen Ausgangssignal die Schwellenspannung eines Comparators (20) Übersteigt, einem Zählerrbaustein (18) ein RESET-Signal aufgibt, wobei von der Unterbrechung der Stromversorgung der Kraftmeßfühler (9), der diesem gegebenenfalls nachgeschaltete Vorverstärker (10) sowie Differenzierverstärker (19) und Comparator (20) ausgenommen sind.

3. Zugkraft-Meßwertgeber nach Anspruch 1 oder 2, dadurch gekennzeichnet, daß der zeitgesteuerte Schalter (17, 18) die Stromversorgung eines Endverstärkers (12), der zum Übertragungskreis gehört, sowie des Spannungs-Frequenz-Wandlers (11) ein- und ausschaltet.

4. Zugkraft-Metßwertgeber nach Anspruch 1 bis 3, dadurch gekennzeichnet, daß der zeitgesteuerte Schalter (17, 18) einen Zählerbaustein (18) umfaßt und jeweils nach n gezählten Impulsen eine Unterbrechung der Stromversorgung auslöst.

5. Zugkraft-Meßwertgeber nach Anspruch 4, dadurch gekennzeichnet, daß der Zählerbaustein (18) einen über einen Schaltimpuls A auslösbaren RESET-Zustand aufweist, der eine neue Zählung von n Impulsen einleitet.

6. Zugkraft-Meßwertgeber nach Anspruch 1 bis 5, dadurch gekennzeichnet, daß ein Zeittaktsignal für den Zählerbaustein (18) am Ausgang des Spannungs-Frequenz-Wandlers (11) abgenommen wird.

7. Zugkraft-Meßwertgeber nach Anspruch 1, mit einem dem Spannungs-Frequenz-Wandler (11) nachgeschalteten Endverstärker (12), dadurch gekennzeichnet, daß eine Schaltspannung $B_1$ bei Anlegen einer Aufladespannung an die Pole des Akkumulators (15) ebenfalls eine Unterbrechung der Stromversorgung des Endverstärkers (12) und des Spannungs-Frequenz-Wandlers (11) bewirkt.

8. Zugkraft-Meßwertgeber nach Anspruch 7, dadurch gekennzeichnet, daß bei Anliegen der Spannung B ebenfalls ein RESET-Signal des Zählerbausteins (18) für die Dauer der angelegten Akkumulator-Ladespannung bewirkt ist, und daß nach Abschaltung der Akkumulator-Ladespannung der Zählerbaustein (18) den Steuerschalter (17) für die Dauer von n Zählimpulsen einschaltet.

9. Zugkraft-Meßwertgeber nach Anspruch 1, dadurch gekennzeichnet, daß die Stromversorgung aller stromverbrauchenden Elemente mit Hilfe eines weiteren zeitgesteuerten Schalters (28, 31) nach einer Zeitspanne $t_2$ einer Zugkraftkonstanz unterbricht, wobei

$$t_2 \gg t_1$$

ist, und erst bei Auftreten einer Ladespannuna $B_1$ wieder einschaltet.

10. Zugkraft-Meßwertgeber nach einem der vorhergehenden Ansprüche, dadurch gekennzeichnet, daß die Stromversorgung aller stromverbrauchenden Elemente mittels eines spannungsgesteuerten Schalters (31, 32, 33) bei Unterschreiten einer festgelegten Spannung des Akkumulators unterbrochen wird.

11. Zugkraft-Meßwertgeber nach einem der Ansprüche 1 bis 8, dadurch gekennzeichnet, daß die elektronischen Teile des Meßkreises (9, 10, 11, 12, 13, 17, 18, 19, 20, 25) in einem ersten und der Akkumulator (15) in einem zweiten Gehäuse (Seilbirnen 1 und 2) eingebaut sind.

12. Zugkraft-Meßwertgeber nach Anspruch 9, dadurch gekennzeichnet, daß die beiden Seilbirnen (1, 2) an den beiden Enden eines Verbindungsstahlseils (3) angebracht sind, das zwei innenliegende isolierte Leiter enthält und daß eine dritte Verbindungsleitung zwischen den beiden Seilbirnen (1, 2) durch das Stahlseil (3) selbst gebildet ist, wobei dieses auf dem Massepotential der Elektronik-Bausteine liegt, so daß das Stahlseil (3) sowie das Gehäuse der Seilbirne (1) als elektrischer Schutzschirm wirken.

13. Zugkraft-Meßwertgeber nach wenigstens einem der vorhergehenden Ansprüche, dadurch gekennzeichnet, daß das Stahlseil (3) in der Akkumulator-Seilbirne (2) isoliert eingebaut ist, so daß die Seilbirne (2) gegenüber der Seilbirne (1) ein anderes Potential aufweist.

14. Zugkraft-Meßwertgeber nach wenigstens einem der vorhergehenden Ansprüche, dadurch gekennzeichnet, daß die beiden Gehäuse der Seilbirnen (1, 2) Pole darstellen, über die die Meßwechselspannung abgegeben wird, wobei gleichzeitig diese Pole auch zur Anlegung der Ladespannung für den Akkumulator (15) dienen können.

## Claims

1. A tension sensor effective in a tension-associated connection to a cable to ascertain tensions produced during eable laying, the sensor comprising at least the following parts :

A force sensor, e.g. extensometer strips ;

A preamplifier disposed after the force sensor ;

A voltage-to-frequency converter converting the signal of the force sensor ;

A transfer circuit which filters out the converted signal of the force sensfor and transmits it to a reading station, and

An accumulator for powering the foregoing elements,

characterised in that the tension sensor also has a timed switch (17, 18) which interrupts the power supply of at lest one current-consuming element after a predetermined period $t_1$ of constant tension, then restores the power supply only in response to an alteration in tension.

2. A tension sensor according to claim 1, characterised in that the alteration in tension is defined as a particular signal from the preamplifier (10) which is sent through a subsequent differentiator (19) which passes only signal alterations

$$\frac{du}{dt} \neq 0$$

and, when its output signal exceeds the threshold voltage of a comparator (20), supplies a reset signal to a counter unit (18), the switch-off being ineffective for the force sensor (9), the preamplifier possibly disposed thereafter, the differentiator (19) and the comparator (20).

3. A tension sensor according to claim 1 or 2, characterised in that the timed switch (17, 18) switches on and off the power supply both of a final amplifier (12) forming part of the transfer circuit and also of the voltage-to-frequency converter (11).

4. A tension sensor according to claims 1 to 3, characterised in that the timed switch (17, 18) comprises a counter unit (18) and after every $\underline{n}$ counted pulses triggers an interruption of the power supply.

5. A tension sensor according to claim 4, characterised in that the counter unit (18) has a reset state triggerable by way of a switching pulse A and initiating a fresh count of $\underline{n}$ pulses.

6. A tension sensor according to claims 1 to 5, characterised in that a timing signal for the counter unit (18) id derived at the output of the voltage-to-frequency converter (11).

7. A tension sensor according to claim 1 having a final amplifier (12) disposed after the converter (11), characterised in that in response to the application of a charging voltage to the poles of the accumulator (15) a switching voltage $B_1$ also produces an interruption of the power supply of the final amplifier (12) and converter (11).

8. A tension sensor according to claim 7, characterised in that when the voltage B is present a counter unit reset signal is also produced which lasts for as long as the accumulator charging voltage is applied, and after the same has been switched off the counter unit (18) switches on the timed switch (17) for a period of $\underline{n}$ pulses.

9. A tension sensor according to claim 1, characterised in that the power supply of all the power-consuming elements is interrupted by means of a further timed switch (28, 31) after a period $t_2$ of constant tension where $t_2 \gg t_1$, the power supply being restored only in response to the occurence of a charging voltage $B_1$.

10. A tension sensor according to any of the previous claims, characterised in that the power supply of all the power-connsuming elements is interrupted by means of a voltage-controlled switch (31 to 33) in response to a predetermined accumulator voltage being undershot.

11. A tension sensor according to any of claims 1 to 8, characterised in that the electronic parts of the measuring circuit (9 to 13, 17 to 19, 20, 25) are received in a first housing (thimble 1) and the accumulator (15) is received in a second housing (thimble 2).

12. A tension sensor according to claim 9, characterised in that the two thimbles (1, 2) or the like are disposed at bothe ends of a connecting steel rope (3) which receives insultated conductors in its interior, and a third connecting line between the two thimbles (1, 2) is provided by steel rope (3) itself, the same being at the earth potential of the electronic units, so that the steel rope (3) and the casing of the thimble (1) are effective as electrical screening.

13. A tension sensor according to at least one of the previous claims, characterised in that the steel rope (3) is received in the accumulator thimble (2) but insulated therefrom so that the thimble (2) is at a different potential from the thimble (1).

14. A tension sensor according to at least one of the previous claims, characterised in that the two housings of the thimbles (1, 2) are effective as poles via which the ac voltage is delivered, the poles also being adapted to receive the charging voltage for the accumulator (15).

## Revendications

1. Dynamomètre de traction qui sert, en liaison de traction avec un câble, à déterminer les forces de traction lors de la pose du câble, le dynamomètre comprenant au moins les éléments suivants :
   – un capteur de force, par exemple des bandes de mesure d'allongement,
   – un préamplificateur monté en aval du capteur de force,
   – un transducteur tension-fréquence qui transforme le signal du capteur de force,
   – un circuit de transfert qui découple le signal transformé du capteur de force et le transfère à une station de lecture, et
   – un accumulateur destiné à l'alimentation en courant des éléments mentionnés ci-dessus, caractérisé en ce que le dynamomètre présente en outre un interrupteur à commande de temps (17, 18) qui interrompt l'alimentation en courant au moins d'un élément utilisant le courant après un laps de temps fixe $t_1$ d'une constante de force de traction et ne le brancher à nouveau qu'à l'apparition d'une variation de force de traction.

2. Dynamomètre de traction selon la revendication 1, caractérisé en ce que la variation de force de traction est définie comme un signal déterminé provenant du préamplificateur (10), qui est envoyé par un amplificateur différentiel (19) monté en aval que seules des variations de signal

$$\frac{du}{dt} = 0$$

peuvent actionner et qui, lorsque le signal de sortie de celui-ci dépasse une tension de seuil d'un comparateur (20), envoie à un élément compteur (18) un signal de repositionnement (ou RESET), le capteur de force (9), le préamplificateur (10) qui est éventuellement monté en aval de ce dernier, ainsi que l'amplificateur différentiel (19) et le comparateur (20) étant exclus de cette interruption de l'alimentation en courant.

3. Dynamomètre de traction selon la revendication 1 ou 2, caractérisé en ce que le compteur à commande de temps (17, 18) branche et débranche l'alimentation en courant d'un amplificateur final (12) qui appartient au circuit de transfert, ainsi que celle du transducteur tension-fréquence (11).

4. Dynamomètre de traction selon l'une des revendications 1 à 3, caractérisé en ce que l'interrupteur à commande de temps (17, 18) comprend un composant compteur (18) et déclenche une interruption de l'alimentation en courant chaque fois que n impulsions ont été comptées.

5. Dynamomètre de traction selon la revendication 4, caractérisé en ce que le composant de compteur (18) comporte un état de RESET qui peut être déclenché par une impulsion d'interruption A, et qui introduit un nouveau comptage de n impulsions.

6. Dynamomètre de traction selon l'une des revendications 1 à 5, caractérisé en ce qu'un signal de cycle de temps est prélevé pour le composant de compteur (18) à la sortie du transducteur (11) tension-fréquence.

7. Dynamomètre de traction selon la revendication 1, comportant un amplificateur final (12) monté en aval du transducteur tension-fréquence (11), caractérisé en ce qu'une tension d'interruption $B_1$ actionne, lors de l'application d'une tension de charge aux pôles de l'accumulateur (15), également une interruption de l'alimentation en courant de l'amplificateur final (12) et du transducteur tension-fréquence (11).

8. Dynamomètre de traction selon la revendication 7, caractérisé en ce que, lors de l'application de la tension B, un signal de RESET du composant de compteur (18) est également mis en oeuvre pendant la durée de la tension de charge appliquée de l'accumulateur,

et en ce que, après que la tension de charge de l'accumulateur a été débranchée, le composant compteur (18) branche l'interrupteur de commande (17) pendant la durée de n impulsions.

9. Dynamomètre de traction selon la revendication 1, caractérisé en ce que l'alimentation en courant de tous les éléments consommateurs de courant s'interrompt grâce à un autre interrupteur à commande de temps (28, 31) après un laps de temps $t_2$ d'une constante de force de traction, où

$$t_2 \gg t_1$$

et ne brancher à nouveau que lors de l'apparition d'une tension de charge $B_1$.

10. Dynamomètre de traction selon l'une des revendications précédentes, caractérisé en ce que l'alimentation en courant de tous les éléments consommateurs de courant est interrompue au moyen d'un interrupteur à commande de temps (31, 32, 33) lorsque n'est pas atteinte une tension définie de l'accumulateur.

11. Dynamomètre de traction selon l'une des revendications 1 à 8, caractérisé en ce que les éléments électroniques du circuit de mesure (9, 10, 11, 12, 13, 17, 18, 19, 20, 25) sont montées dans un premier boîtier et que l'accumulateur (15) est monté dans un deuxième boîtier (pinces de filin 1 et 2).

12. Dynamomètre de traction selon la revendication 9, caractérisé en ce que les deux pinces de filin (1, 2) sont disposées aux deux extrémités d'un filin en acier de liaison (3), qui contient deux conducteurs isolés situés à l'intérieur et en ce qu'une troisième ligne de liaison est réalisée automatiquement entre les deux pinces de filin (1, 2) par le filin en acier (3), ce dernier étant au potentiel de la masse des composants électroniques, de sorte que le filin en acier (3) ainsi que le bottier de la pince de filin (1) agissent comme blindage électrique de protection.

13. Dynamomètre de traction selon l'une au moins des revendications précédentes, caractérisé en ce que le filin d'acier (3) est monté en étant isolé dans la pince de filin (2) d'accumulateur, de sorte que la pince de filin (2) présente un potentiel différent de celui de la pince de filin (1).

14. Dynamomètre de traction selon l'une au moins des revendications précédentes, caractérisé en ce que les deux boîtiers des pinces de filin (1, 2) représentent des pôles grâce auxquels la tension de variation de mesure est indiquée, ces pôles pouvant simultanément servir à l'application de la tension de charge de l'accumulateur (15).

Fig.1

EP 0 308 453 B1

Fig.2